# EUROPÄISCHE PATENTSCHRIFT

(11) **EP 2 603 345 B1**
(45) Veröffentlichungstag und Bekanntmachung des Hinweises auf die Patenterteilung: **13.11.2013**
(21) Anmeldenummer: 11738581.5
(22) Anmeldetag: 01.07.2011
(51) Int. Cl.: B23K 9/29, B23K 9/32, F16B 21/02, F16B 21/16

(54) **BRENNERKÖRPER MIT EINEM BEFESTIGUNGSSYSTEM ; WIG-SCHWEISSBRENNER MIT EINEM SOLCHEN BRENNERKÖRPER**
BURNER BODY COMPRISING A SECURING SYSTEM; TIG WELDING TORCH COMPRISING SUCH A BURNER BODY
CORPS DE CHALUMEAU MUNI D'UN SYSTÈME DE FIXATION ET CHALUMEAU DE SOUDAGE TIG MUNI D'UN TEL CORPS DE CHALUMEAU

(30) Priorität: 09.08.2010 AT 13372010
(43) Veröffentlichungstag der Anmeldung: 19.06.2013
(73) Patentinhaber: Fronius International GmbH, 4643 Pettenbach (AT)
(72) Erfinder: LEEB, Josef, A-4643 Pettenbach (AT); RAXENDORFER, Josef, A-4652 Steinerkirchen (AT); HUBINGER, Manfred, A-4550 Kremsmünster (AT)
(74) Vertreter: Sonn & Partner Patentanwälte
(86) Internationale Anmeldenummer: PCT/AT2011/000290
(87) Internationale Veröffentlichungsnummer: WO 2012/019208

(56) Entgegenhaltungen:
- GB-A- 1 568 790
- JP-A- 10 099 968
- US-A- 3 689 733
- US-A- 3 893 274
- US-A- 4 212 559

## Beschreibung

Die Erfindung betrifft ein Befestigungssystem für die lösbare Befestigung eines Brennerkörpers eines WIG-Schweißbrenners gemäß dem Oberbegriff des Anspruchs 1.

Ebenso betrifft die Erfindung Brennerkörper für das Befestigungssystem eines WIG-Schweißbrenners gemäß dem Oberbegriff des Anspruchs 10.

Auch betrifft die Erfindung einen WIG-Schweißbrenner mit einem Brennergriff, einem Brennerkörper und einem oben genannten Befestigungssystem, wobei der Brennergriff die Kupplung des Befestigungssystems enthält, und wobei der Brennerkörper das Steckelement des Befestigungssystems enthält, siehe Anspruch 13.

Je nach Anforderung des durchzuführenden Schweißprozesses werden bevorzugt unterschiedliche Schweißbrenner eingesetzt. Damit dabei nicht der gesamte Schweißbrenner mit dem daran befestigten Schlauchpaket getauscht werden muss, sind die Brennerkörper - welche einen Teil des Schweißbrenners darstellen - wechselbar ausgebildet. Insbesondere sind WIG-Schweißbrenner aufgrund der hohen Belastungen des Öfteren zu wechseln. Für den Wechsel des Brennerkörpers eines WIG-Schweißbrenners sind entsprechende Vorrichtungen aus dem Stand der Technik bekannt.

So zeigt die US 4,049,943 den Wechsel von Brennerkörpern, wobei sowohl ein Elektrodenhalter als auch ein WIG-Brennerkörper an der Kupplung, welche mit dem Schlauchpaket verbunden ist, befestigbar sind. Dabei wird das von der Kupplung aufgenommene Steckelement des Brennerkörpers über Kugeln befestigt. Diese Kugeln sind in der Kupplung angeordnet und greifen in eine Nut des Steckelements ein. Zur Übertragung des Gases von der Kupplung in den Brennerkörper wird bei der Befestigung des Steckelements ein Ventil betätigt. Nachteilig ist hier insbesondere, dass die Kugeln die Kupplung vergrößern und ein aufwendiges und störanfälliges Ventil erforderlich ist.

Aus der US 6,706,994 B1 ist des Weiteren ein Wechsel des Brennerkörpers bekannt. Dabei ist für die einzelnen Medien ein eigener Schnellverschluss vorgesehen, sodass der Brennerkörper wechselbar ist. Die Schnellverschlüsse sind dabei durch Halbschalen geschützt. Nachteilig ist hierbei, dass zum Wechsel des Brennerkörpers mehrere Schritte erforderlich sind, da zuerst die Halbschalen entfernt und jeder Schnellverschluss einzeln geöffnet werden muss. Ebenso wird durch die getrennte Medienführung die Baugröße des Brenners vergrößert und die Position des Brennerkörpers kann nicht verändert werden.

Die US 2010/0012637 A1 zeigt ein Befestigungssystem eines Brennerkörpers eines Schweißbrenners an einem Brennergriff über welches Gas und Strom übertragen werden kann. Nachteilig bei dieser Konstruktion ist, dass die Position des Brennerkörpers nach der Befestigung nicht frei wählbar ist.

Die GB 1 568 790 A, die als nächstliegenden Stand der Technik angesehen wird, zeigt einen drehbaren Schweißkopf ohne Befestigungssystem bzw. Kupplung, welches es erlaubt, im zusammengesteckten Zustand des Schweißkopfes mit dem Brennergriff bzw. Schlauchpaket den Schweißkopf gegenüber dem Brennergriff bzw. dem Schlauchpaket beliebig zu verdrehen.

Die US 4 212 559 A zeigt die Verbindung zweier Teile, wie z.B. Maschinenteile bei Kohlenminenmaschinen, die eine gute und sichere Befestigung eines Werkzeugs an einer Maschine erlaubt. Eine Verdrehung des Werkzeugs gegenüber der Maschine im zusammengesteckten Zustand ist hier unerwünscht und nicht möglich.

Die Aufgabe der Erfindung liegt darin, den Brennerkörper eines WIG-Schweißbrenners wechselbar auszubilden, wobei die Baugröße des WIG-Schweißbrenners unverändert bleibt.

Gelöst wird die Aufgabe durch ein oben genanntes Befestigungssystem, wobei das Steckelement ein Gaselement und ein Stromelement und ein dazwischen angeordnetes Befestigungselement mit einer Flachstelle, einer umlaufenden Nut und einem Steg aufweist, wobei das Gaselement einen geringeren Durchmesser als das Befestigungselement und das Stromelement aufweist, und wobei die Kupplung eine Gasbohrung und ein Fixierelement aufweist, über welches Fixierelement das Befestigungselement mit der Flachstelle in einen zusammengesteckten Zustand führbar ist, bis das Gaselement in der Gasbohrung der Kupplung dichtend angeordnet ist, wobei im zusammengesteckten Zustand das Steckelement gegenüber der Kupplung im Wesentlichen beliebig verdrehbar ist, wobei das Fixierelement in der Nut des Steckelements geführt ist.

Vorteilhaft ist hier, dass der Brennerkörper werkzeuglos und schnell durch eine einfache Steck- und Drehbewegung gewechselt werden kann. Dadurch kann der Brennerkörper auch einfach an die erforderliche Leistung angepasst werden. Des Weiteren ergeben sich dadurch geringe Stillstandzeiten während des Wechsels, beispielsweise bei einer Beschädigung des Brennerkörpers. Ebenso kann in vorteilhafter Weise die Position des Brennerkörpers für den Schweißvorgang schnell an das Werkstück angepasst werden, sodass stets die optimale Zugänglichkeit gewährleistet ist. Auch ist von Vorteil, dass bestehende Brennergriffe durch den Platz sparenden Aufbau des Befestigungssystems umrüstbar sind. Dementsprechend wird die Baugröße des bestehenden WIG-Schweißbrenners durch das erfindungsgemäße Befestigungssystem nicht verändert. Von Vorteil ist aber auch, dass der Brennerkörper erst befestigt werden kann, sobald die Gasabdichtung erfolgt ist, wodurch für jede Position automatisch die Gasabdichtung gewährleistet ist. Von Vorteil ist auch, dass mit nur einem Schlauchpaket verschiedene Schweissbrenner-Leistungsklassen über die Wahl des jeweiligen Wechselbrennerkörpers gegeben sind. Von Vorteil ist, dass keine Störkonturen außerhalb des Brennergriffes dadurch entstehen. Durch die freie Einstellbarkeit der Position des Brennerkörpers mit einer manuellen Drehbewegung wird erreicht, dass die Position ausschließlich durch die Drehbewegung eingestellt wird, wobei die Arretierung des Brennerkörpers über das Fixierelement erfolgt.

Von Vorteil ist auch, wenn zwischen der Nut und dem Steg des Befestigungselements des Steckelements ein in Richtung zur Nut verjüngt ausgebildeter Konus angeordnet ist, sodass durch den Konus die Führung zum Einstellen der Position des Brennerkörpers verbessert wird und das Steckelement vom Konus in der Kupplung gehalten ist.

In vorteilhafter Weise wird durch die Maßnahme, dass am dem Gaselement gegenüberliegenden Ende des Steckelements ein Anschlag angeordnet ist, eine spürbare Stellung erreicht, sodass der Brennerkörper durch die Drehbewegung befestigt und die Position eingestellt werden kann und die Gasdichtheit gegeben ist.

Durch die Maßnahme, dass ein Federelement vor dem Anschlag positioniert ist, wird in vorteilhafter Weise ein zusätzlicher Stromübergang über den Anschlag und die Stirnseite der Kupplung erreicht, da das Federelement einen sicheren Kontakt gewährleistet. Gleichzeitig wird ein Druck zwischen Konus und Fixierelement aufgebaut und ein unerwünschtes Verdrehen der Position des Brennerkörpers wird erschwert.

Von Vorteil ist aus Dichtheitsgründen auch, wenn im Gaselement des Steckelements eine Nut für einen Dichtring angeordnet ist. Auch ist hier eine einfache Kontrolle des Dichtrings möglich, da dieser am Steckelement des wechselbaren Brennerkörpers angeordnet ist. Somit bleibt der Dichtring beim Wechsel am Steckelement, sodass der Benutzer in einfacher Weise diesen kontrollieren kann und gegebenenfalls ersetzen kann.

In vorteilhafter Weise wird durch die Maßnahme, dass am Gaselement des Steckelements eine mit der Flachstelle des Befestigungselements fluchtende Flachstelle angeordnet ist, eine bessere Erkennung der Flachstelle am Befestigungselement erreicht.

Durch die Maßnahme, dass in der Kupplung zwei konzentrische Bohrungen für das Steckelement angeordnet sind, wobei eine Bohrung als Gasbohrung und die weitere Bohrung als Strombohrung ausgebildet ist, wird eine einfache Aufnahme für das Steckelement sowie eine einfache Abdichtung und ein einfacher Stromübergang erreicht.

Von Vorteil ist auch, dass das Fixierelement in der Kupplung in der Strombohrung in Form eines Kreissegments angeordnet ist und an dieser Stelle einen Durchmesser der Strombohrung verringert, wodurch gleichzeitig die Befestigung und ein Stromübergang erreicht wird.

In vorteilhafter Weise wird durch die Maßnahme, dass die Kupplung zylinderförmig ausgebildet ist und im Bereich des Fixierelements ein Quader angeordnet ist, erreicht, dass das Fixierelement von außen montiert werden kann und gleichzeitig das Kreissegment in der Strombohrung herstellt. Somit kann das Fixierelement auch einfach gewechselt werden, nachdem dieses durch die Drehbewegungen zu stark verschlissen ist.

Ebenso wird die Aufgabe der Erfindung bei einem Brennerkörper wie angegeben dadurch gelöst, dass der Brennerkörper ein Steckelement aufweist, wobei das Steckelement ein Gaselement und ein Stromelement und ein dazwischen angeordnetes Befestigungselement mit einer Flachstelle, einer umlaufenden Nut und einem Steg aufweist, wobei das Gaselement einen geringeren Durchmesser als das Befestigungselement und das Stromelement aufweist, sodass das Steckelement im zusammengesteckten Zustand gegenüber der Kupplung des Befestigungssystems im Wesentlichen beliebig verdrehbar ist.

Vorteile hierzu sowie zu den Maßnahmen der Unteransprüche können aus den bereits zum Befestigungssystem beschriebenen Vorteilen entnommen werden.

Auch wird die Aufgabe der Erfindung bei einem WIG-Schweißbrenner wie angegeben dadurch gelöst, dass das mit dem Brennerkörper verbundene Steckelement um 180° zur üblichen Schweißposition verdreht und mit der Flachstelle des Befestigungselements über das Fixierelement in den Brennergriff in einen zusammengesteckten Zustand führbar ist, und das mit dem Brennerkörper verbundene Steckelement durch eine Drehbewegung befestigbar ist, und das Steckelement im zusammengesteckten Zustand gegenüber der Kupplung im Wesentlichen beliebig verdrehbar und die Schweißposition über die Drehbewegung einstellbar ist.

Die vorliegende Erfindung wird beispielhaft anhand der beigefügten, schematischen Zeichnungen näher erläutert.

Darin zeigen:
Fig. 1 eine schematische Darstellung einer Schweißmaschine bzw. eines Schweißgerätes;
Fig. 2 eine schematische Schnittdarstellung der Kupplung des erfindungsgemäßen Befestigungssystems;
Fig. 3 eine schematische Seitenansicht der Kupplung;
Fig. 4 eine schematische Schnittdarstellung des Steckelements des erfindungsgemäßen Befestigungssystems;
Fig. 5 das erfindungsgemäße Befestigungssystem in schematischer, explodierter Darstellung;
Fig. 6 bis 8 schematische Schnittdarstellungen des Befestigungssystems in unterschiedlichen Positionen; und
Fig. 9 das Befestigungssystem in einem WIG-Schweißbrenner.

In den Zeichnungsfiguren sind gleiche Teile des Ausführungsbeispiels mit gleichen Bezugszeichen versehen.

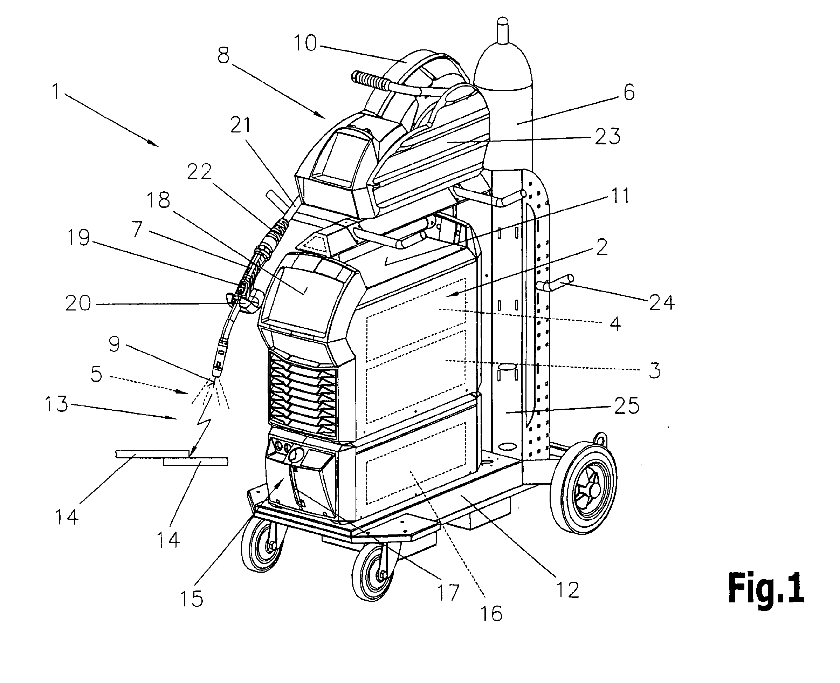

In Fig. 1 ist ein Schweißgerät 1 bzw. eine Schweißanlage für verschiedenste Prozesse bzw. Verfahren, wie z.B. MIG/MAG-Schweißen bzw. WIG/TIG-Schweißen oder Elektroden-Schweißverfahren, Doppeldraht/Tandem-Schweißverfahren, Plasma- oder Lötverfahren usw., gezeigt.

Das Schweißgerät 1 umfasst eine Stromquelle 2 mit einem darin angeordneten Leistungsteil 3, einer Steuervorrichtung 4 und weiteren nicht dargestellten Komponenten und Leitungen, wie beispielsweise einem Umschaltglied, Steuerventile, usw. Die Steuervorrichtung 4 ist beispielsweise mit einem Steuerventil verbunden, welches in einer Versorgungsleitung für ein Gas 5, insbesondere ein Schutzgas, wie beispielsweise CO₂, Helium oder Argon und dergl., zwischen einem Gasspeicher 6 und einem Schweißbrenner 7 bzw. einem Brenner angeordnet ist.

Zudem kann über die Steuervorrichtung 4 noch ein Drahtvorschubgerät 8, welches für das MIG/MAG-Schweißen üblich ist, angesteuert werden, wobei über eine Versorgungsleitung ein Zusatzwerkstoff bzw. ein Schweißdraht 9 von einer Vorratstrommel 10 bzw. einer Drahtrolle in den Bereich des Schweißbrenners 7 zugeführt wird. Selbstverständlich ist es möglich, dass das Drahtvorschubgerät 8, wie es aus dem Stand der Technik bekannt ist, im Schweißgerät 1, insbesondere im Gehäuse 11 der Stromquelle 2, integriert ist und nicht, wie in Fig. 1 dargestellt, als Zusatzgerät auf einem Fahrwagen 12 positioniert ist. Hierbei wird von einem so genannten kompakten Schweißgerät 1 gesprochen. Dabei ist es auch möglich, dass das Drahtvorschubgerät 8 direkt auf das Schweißgerät 2 aufgesetzt werden kann, d.h., dass das Gehäuse 11 der Stromquelle 2 auf der Oberseite zur Aufnahme des Drahtvorschubgerätes 8 ausgebildet ist, sodass der Fahrwagen 12 entfallen kann.

Es ist auch möglich, dass das Drahtvorschubgerät 8 den Schweißdraht 9 bzw. den Zusatzwerkstoff außerhalb des Schweißbrenners 7 an die Prozessstelle zuführt, wobei hierzu im Schweißbrenner 7 bevorzugt eine nicht abschmelzende Elektrode angeordnet ist, wie dies beim WIG/TIG-Schweißen üblich ist.

Der Strom zum Aufbauen eines Lichtbogens 13, insbesondere eines Arbeitslichtbogens, zwischen der Elektrode bzw. dem Schweißdraht 9 und einem bevorzugt aus einem oder mehreren Teilen gebildeten Werkstück 14 wird über eine Schweißleitung, nicht dargestellt, vom Leistungsteil 3 der Stromquelle 2, dem Schweißbrenner 7, insbesondere der Elektrode bzw. dem Schweißdraht 9, zugeführt, wobei das zu verschweißende Werkstück 14 über eine weitere Schweißleitung für das weitere Potential, insbesondere das Masse-Kabel, mit der Stromquelle 2, nicht dargestellt, verbunden ist und somit über den Lichtbogen 13 bzw. den gebildeten Plasmastrahl für einen Prozess ein Stromkreis aufgebaut werden kann. Bei Verwendung eines Brenners mit internem Lichtbogen 13 sind die beiden Schweißleitungen, nicht dargestellt, zum Brenner geführt, sodass im Brenner ein entsprechender Stromkreis aufgebaut werden kann, wie dies bei Plasma-Brennern der Fall sein kann. Zum Kühlen des Schweißbrenners 7 kann über ein Kühlgerät 15 der Schweißbrenner 7 unter Zwischenschaltung ev. Komponenten, wie beispielsweise eines Strömungswächters, mit einem Flüssigkeitsbehälter, insbesondere einem Wasserbehälter 16 mit einer Füllstandsanzeige 17, verbunden werden, wodurch bei der Inbetriebnahme des Schweißbrenners 7 das Kühlgerät 15, insbesondere eine für die im Wasserbehälter 16 angeordnete Flüssigkeit verwendete Flüssigkeitspumpe, gestartet wird und somit eine Kühlung des Schweißbrenners 7 bewirkt werden kann. Wie bei dem dargestellten Ausführungsbeispiel gezeigt, wird das Kühlgerät 15 auf dem Fahrwagen 12 positioniert, auf das anschließend die Stromquelle 2 gestellt wird. Die einzelnen Komponenten der Schweißanlage, also die Stromquelle 2, das Drahtvorschubgerät 8 und das Kühlgerät 15, sind dabei derart ausgebildet, dass diese entsprechende Vorsprünge bzw. Ausnehmungen aufweisen, sodass sie sicher aufeinander gestapelt bzw. aufeinander gestellt werden können.

Das Schweißgerät 1, insbesondere die Stromquelle 2, weist weiters eine Ein- und/oder Ausgabevorrichtung 18 auf, über die die unterschiedlichsten Schweißparameter, Betriebsarten oder Schweißprogramme des Schweißgerätes 1 eingestellt bzw. aufgerufen und angezeigt werden können. Dabei werden die über die Ein- und/oder Ausgabevorrichtung 18 eingestellten Schweißparameter, Betriebsarten oder Schweißprogramme an die Steuervorrichtung 4 weitergeleitet und von dieser werden anschließend die einzelnen Komponenten der Schweißanlage bzw. des Schweißgerätes 1 angesteuert bzw. entsprechende Sollwerte für die Regelung oder Steuerung vorgegeben. Hierbei ist es auch möglich, dass bei Verwendung eines entsprechenden Schweißbrenners 7 auch Einstellvorgänge über den Schweißbrenner 7 vorgenommen werden können, wobei dazu der Schweißbrenner 7 mit einer Schweißbrenner-Ein- und/oder Ausgabevorrichtung 19 ausgestattet ist. Bevorzugt ist dabei der Schweißbrenner 7 über einen Datenbus, insbesondere einen seriellen Datenbus, mit dem Schweißgerät 1, insbesondere der Stromquelle 2 oder dem Drahtvorschubgerät 8, verbunden. Zum Starten des Schweißprozesses weist der Schweißbrenner 7 meist einen Startschalter, nicht dargestellt, auf, sodass durch Betätigen des Startschalters der Lichtbogen 13 gezündet werden kann. Um gegen die große Hitzeeinstrahlung vom Lichtbogen 13 geschützt zu werden, ist es möglich, dass der Schweißbrenner 7 mit einem Hitzeschutzschild 20 ausgestattet wird.

Weiters ist in dem dargestellten Ausführungsbeispiel der Schweißbrenner 7 über ein Schlauchpaket 21 mit dem Schweißgerät 1 bzw. der Schweißanlage verbunden, wobei das Schlauchpaket 21 über einen Knickschutz 22 am Schweißbrenner 7 befestigt ist. In dem Schlauchpaket 21 sind die einzelnen Leitungen, wie beispielsweise die Versorgungsleitung bzw. Leitungen für den Schweißdraht 9, für das Gas 5, für den Kühlkreislauf, für die Datenübertragung, usw., vom Schweißgerät 1 zum Schweißbrenner 7 angeordnet, wogegen das Masse-Kabel bevorzugt extra an der Stromquelle 2 angeschlossen wird. Das Schlauchpaket 21 wird über eine Kupplungsvorrichtung, nicht dargestellt, an der Stromquelle 2 oder dem Drahtvorschubgerät 8 angeschlossen, wogegen die einzelnen Leitungen im Schlauchpaket 21 mit einem Knickschutz am bzw. im Schweißbrenner 7 befestigt sind. Damit eine entsprechende Zugentlastung des Schlauchpaketes 21 gewährleistet ist, kann das Schlauchpaket 21 über eine Zugentlastungsvorrichtung, nicht dargestellt, mit dem Gehäuse 11 der Stromquelle 2 oder dem Drahtvorschubgerät 8 verbunden sein.

Grundsätzlich müssen für die unterschiedlichen Schweißverfahren bzw. Schweißgeräte 1, wie beispielsweise WIG-Geräte oder MIG/MAG-Geräte oder Plasmageräte, nicht alle zuvor benannten Komponenten verwendet bzw. eingesetzt werden. So ist es beispielsweise möglich, dass der Schweißbrenner 7 als luftgekühlter Schweißbrenner 7 ausgeführt werden kann, sodass beispielsweise das Kühlgerät 15 entfallen kann. Man kann also sagen, dass das Schweißgerät 1 zumindest durch die Stromquelle 2, und das Drahtvorschubgerät 8, gegebenenfalls auch und das Kühlgerät 15 gebildet wird, wobei diese Komponenten auch in einem gemeinsamen Gehäuse 11 angeordnet sein können. Weiters ist es möglich, dass noch weitere Teile bzw. Komponenten, wie beispielsweise ein Schleifschutz 23 am Drahtvorschubgerät 8 oder ein Optionsträger 24 an einer Haltevorrichtung 25 für den Gasspeicher 6 usw., angeordnet bzw. eingesetzt werden können.

Des Weiteren ist es bekannt, dass der Schweißbrenner 7 zum WIG-Schweißen aus einem Brennergriff 26 und einem Brennerkörper 27 gebildet wird. Dabei ist der Brennergriff 26 mit dem Schlauchpaket 21 verbunden und der Brennerkörper 27 ist lösbar mit dem Brennergriff 26 verbunden, sodass der Brennerkörper 27 wechselbar ist. Dementsprechend weist der Brennerkörper 27 ein Steckelement 28 und der Brennergriff 26 eine Kupplung 29 auf, welche über ein Befestigungselement 30 lösbar verbindbar sind und sowohl den Schweißstrom als auch das Schutzgas 5 übertragen. Somit wird ein Befestigungssystem 31, insbesondere für WIG-Handschweißbrenner, gebildet.

Erfindungsgemäß ist nun vorgesehen, dass das Befestigungselement 30 zwischen einem Gaselement 32 und einem Stromelement 33 des Steckelements 28 angeordnet ist, wobei in der Kupplung 29 des Brennergriffes 26 ein Fixierelement 34 angeordnet ist, welches in das Befestigungselement 30 eingreift, und dass das Gaselement 32 zur Führung über das in der Kupplung 29 angeordnete Fixierelement 34 einen geringeren Durchmesser als das Befestigungselement 30 und das Stromelement 33 aufweist, und dass das Befestigungselement 30 eine Flachstelle 35 aufweist, sodass das Befestigungselement 30 mit der Flachstelle 35 über das Fixierelement 34 führbar ist und gleichzeitig das Gaselement 32 in einer Gasbohrung 37 der Kupplung 29 dichtend angeordnet ist.

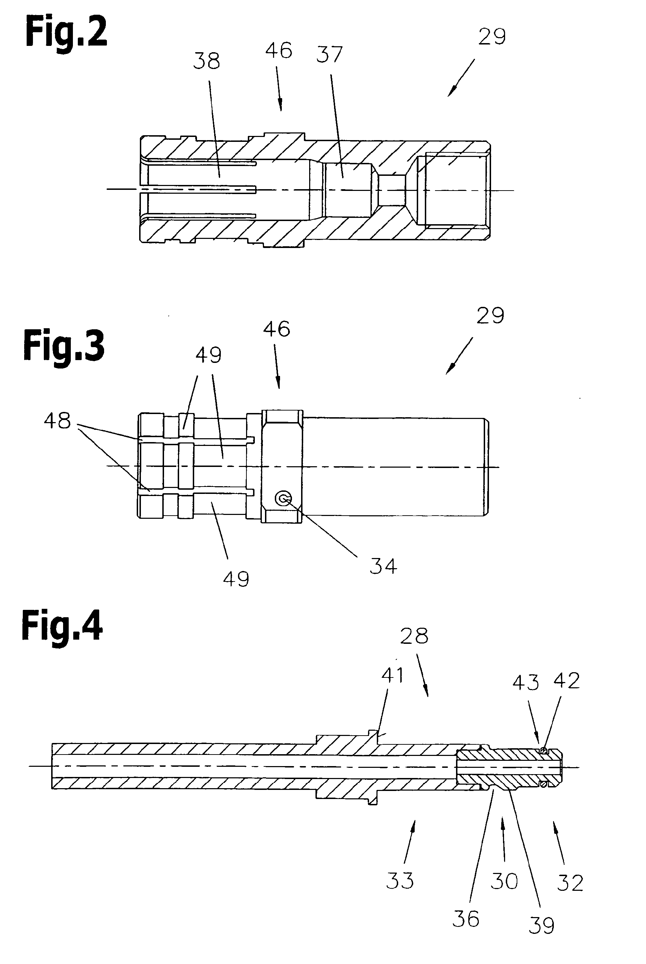

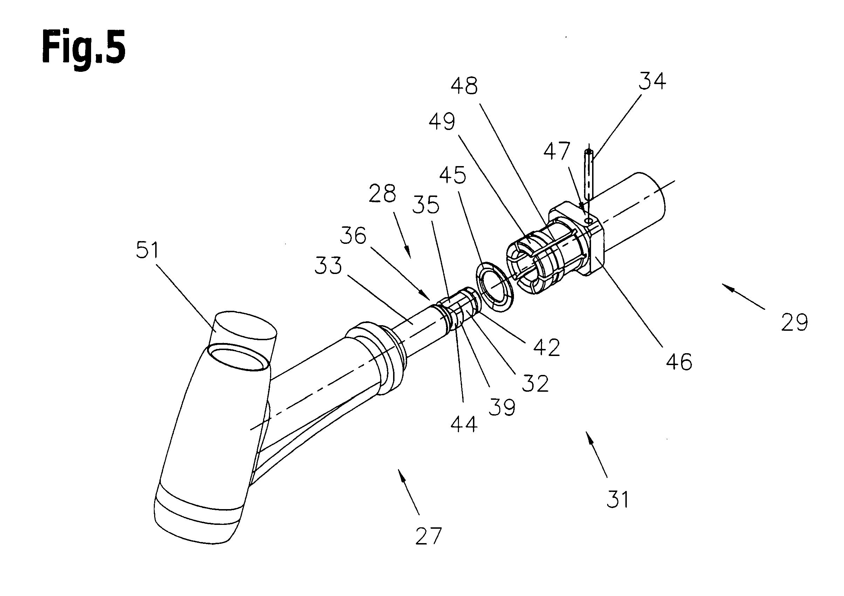

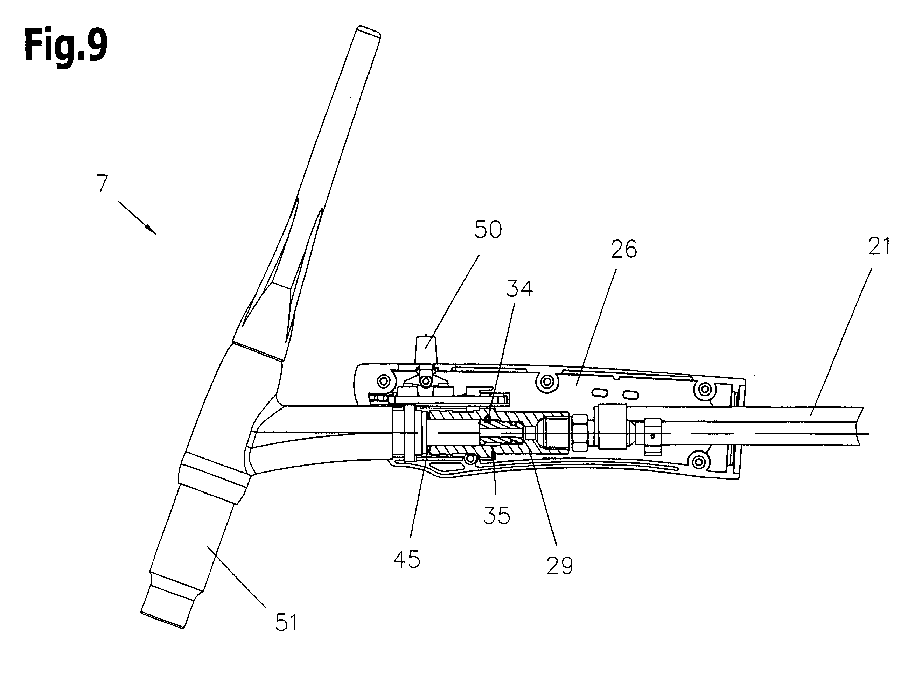

Dieses Befestigungssystem 31 wird im Folgenden in Zusammenschau der Fig. 2 bis 9 im Detail beschrieben.

Gemäß dem Befestigungssystem 31 sind die Kupplung 29 und das Steckelement 28 entsprechend korrespondierend ausgebildet. So ist das Steckelement 28 zylinderförmig ausgebildet, wobei das Gaselement 32 einen geringeren Durchmesser als das Befestigungselement 30 und das Stromelement 33 aufweist. Korrespondierend dazu weist die Kupplung 29 zwei konzentrische Bohrungen auf. Dabei dienen im Wesentlichen die Gasbohrung 37 zur Übertragung des Schutzgases 5 und eine Strombohrung 38 zur Übertragung des Schweißstroms, jeweils von der Kupplung 29 auf das Steckelement 28 zum WIG-Schweißen - bevorzugt mit einem Handschweißbrenner. Entsprechend wird im Wesentlichen der Strom auf das Stromelement 33 und das Gas 5 in einen Gaskanal des Steckelements 28 übertragen. Somit kann das Steckelement 28 in die Bohrungen der Kupplung 29 eingeführt und befestigt werden.

Die Befestigung erfolgt entsprechend mit dem Befestigungselement 30, welches entsprechend das Steckelement 28 in der Kupplung lösbar und drehbar befestigt. Dazu weist das Befestigungselement 30 einen Steg 39 und eine Nut 36 auf, wobei der Steg 39 auf der Seite des Gaselements 32 und die Nut 36 auf der Seite des Stromelements 33 angeordnet ist. Dabei entspricht der Durchmesser des Stegs 39 dem Durchmesser des Stromelements 33, wobei der Radius der Nut 36 im Wesentlichen auf den Abstand zwischen der Flachstelle 35 und der Mittelachse 40 des Befestigungssystems 31 - in diesem Fall des Steckelements 28 - abgestimmt ist. Des Weiteren schafft die Nut 36 einen Freiraum für das Fixierelement 34 der Kupplung 29. Dieser Freiraum ist erforderlich, da das Fixierelement 34 den Durchmesser der Strombohrung 38 an dieser Stelle verringert. Ebenso ermöglicht der Freiraum das Drehen des Brennerkörpers 27. Beispielsweise weist das Fixierelement 34 die Form eines Kreissegments auf. Die Segmenthöhe des Kreissegments stellt dabei die Differenz der Radien der Bohrungen der Kupplung 29 dar. Der Radius der Gasbohrung 37 ist demnach um die Segmenthöhe geringer als der Radius der Strombohrung 38. Das Fixierelement 34 stellt also in der Strombohrung 38 der Kupplung 29 eine Erhöhung dar. Dementsprechend ist der Durchmesser der Strombohrung 38 an dieser Stelle der Erhöhung verringert. Grundsätzlich ist das Fixierelement 34 im vorderen Bereich der Strombohrung 38 angeordnet, also mit einem Abstand vor der Gasbohrung 37. Der Abstand zwischen dem Fixierelement 34 und der Gasbohrung 37 entspricht dabei zumindest der Breite des Stegs 39.

Damit diese Erhöhung keinen Einfluss beim Einführen des Steckelements 28 in die Kupplung 29 bis zu einem Anschlag 41 des Steckelements 28 darstellt, ist der Durchmesser des Gaselements 32 geringer und das Befestigungselement 30 mit einer Flachstelle 35 ausgebildet.

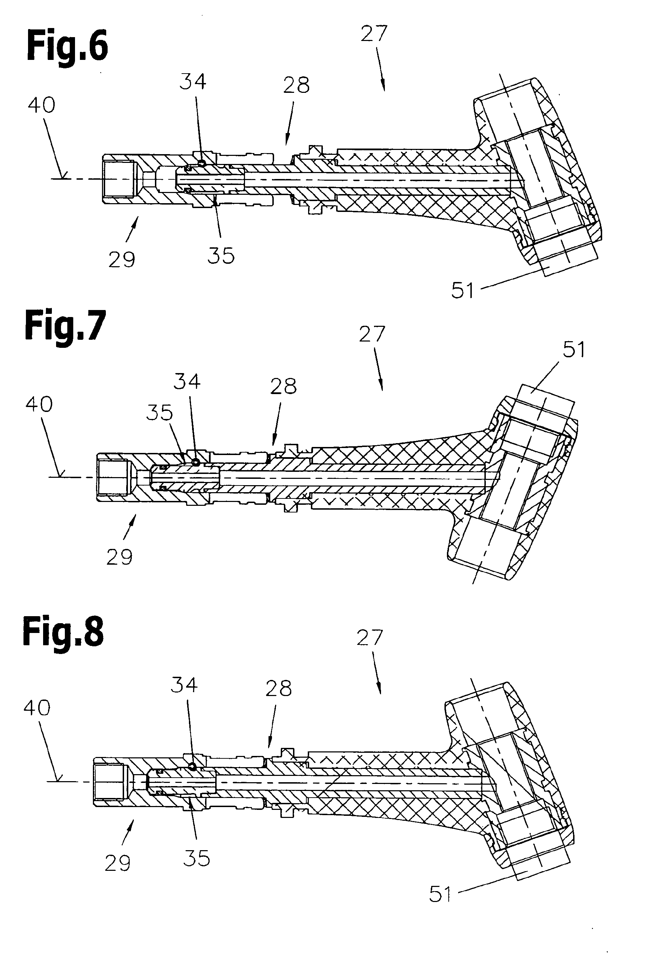

Somit kann das Steckelement 28 in einer beliebigen Position in die Kupplung 29 eingeführt werden, bis der stufige Übergang zwischen dem Gaselement 32 und dem Steg 39 des Befestigungselements 30 am Fixierelement 34 anschlägt. In diesem Fall wurde also der Brennerkörper 27 im Wesentlichen in Schweißposition in die Kupplung 29 eingeführt, wie aus Fig. 6 ersichtlich. In diesem Zustand befindet sich bereits ein Teil des Gaselements 32 in der Gasbohrung 37. Dieser Teil befindet sich vor einem Dichtring 42, welcher in einer Nut 43 des Gaselements 32 angeordnet ist. Dementsprechend ist die Gasbohrung 37 noch nicht abgedichtet und der Brennerkörper 27 noch nicht befestigt.

Demnach wird vom Benutzer der Brennerkörper 27 und somit das Steckelement 28 manuell verdreht, bis die Flachstelle 35 mit der Kreissehne des Kreissegments eine Ebene bildet.

Nachdem also der Brennerkörper 27 in die richtige Position gedreht wurde, kann dieser bis zum Anschlag 41 eingeführt (Fig. 7) werden. Dabei werden gleichzeitig die Nut 36 in die Ebene des Fixierelements 34 und der Dichtring 42 in die Gasbohrung 37 geschoben, bis der Anschlag 41 des Steckelements 28 die Stirnseite der Kupplung 29 berührt. Der Dichtring 42 weist dabei einen Außendurchmesser auf, welcher zwischen dem Durchmesser des Gaselements 32 und dem Durchmesser des Stegs 39 liegt. Somit wird der Dichtring 42 beim Einführen in die Gasbohrung 37 entsprechend verengt und gewährleistet dadurch die Dichtheit.

In diesem zusammengesteckten Zustand kann der Brennerkörper 27 manuell verdreht und befestigt (Fig. 8) werden, wobei dieser durch einen Konus 44 gehalten wird. Dabei ist der Konus 44 zwischen Steg 39 und Nut 36 angeordnet. Zusätzlich gleicht der Konus 44 die unterschiedlichen Durchmesser von Steg 39 und Nut 36 aus und stellt einen Übergang dar. Somit wird der Brennerkörper 27 gehalten, indem der Konus 44 gegen das Fixierelement 34 gedrückt wird. Ist beispielsweise das Fixierelement 34 gefedert ausgeführt, übt dieses zusätzlich eine Kraft auf den Konus 44 aus, sodass die Position des Brennerkörpers 27 mit einer erhöhten Kraft fixiert wird. Somit ist auch gewährleistet, dass der Brennerkörper 27 während eines Schweißvorgangs in der eingestellten Position unverändert gehalten ist.

Die Position des Brennerkörpers 27 kann im Wesentlichen beliebig an den durchzuführenden Schweißvorgang angepasst und/oder eingestellt werden, indem der Brennerkörper 27 verdreht wird und somit eine Arretierung erfolgt. Die Positionen für den Brennerkörper 27 können also auf der Länge des Konus 44 beliebig gewählt werden. Dabei wird die Länge im Wesentlichen durch den Umfang gebildet, wobei entsprechend die Flachstelle 35 den Kreisumfang unterbricht und somit den Konus 44 verkürzt. Dadurch wird entsprechend ein Winkel zum stufenlosen Einstellen der Position vorgegeben. Beispielsweise bewegt sich dieser Winkel im Bereich um 320°.

Zusätzlich kann die Haltekraft erhöht werden, wenn am Steckelement 28 vor dem Anschlag 41 ein Federelement 45, beispielsweise ein Federring, positioniert ist. Dabei weist das Federelement 45 entsprechend federnde und gut elektrisch leitende Eigenschaften auf. Demnach ist der Federring im zusammengebauten Zustand zwischen dem Anschlag 41 und der Stirnseite der Kupplung 29 angeordnet, sodass das Steckelement 28 im Wesentlichen aus der Kupplung 29 gedrückt wird und der Konus 44 verstärkt gegen das Fixierelement 34 gedrückt wird.

Die Fixierung der Position des Brennerkörpers kann auch dadurch erfolgen und/oder zumindest dadurch unterstützt werden, indem sowohl im Brennerkörper 27 als auch im Brennergriff 26 im Bereich des Anschlags 41 eine isolierte Reibfläche angeordnet ist, sodass eine Reibkraft ausgeübt wird. Entsprechend muss die Reibkraft mit der Drehbewegung überwunden werden, um die Position des Brennerkörpers 27 zu verstellen.

Des Weiteren können das Befestigungselement 30 und das Gaselement 32 durch ein eigenständiges Teil gebildet sein, welches entsprechend mit dem Stromelement 33 beispielsweise durch eine Löt- und/oder Pressverbindung verbunden ist. Dabei ist beispielsweise das eigenständige Teil aus Stahl, Chrom-Nickel oder dergleichen - also einem harten Material - gebildet, sodass das Material aufgrund der Haltekraft nicht verformt wird. Im Gegensatz dazu ist das Stromelement 33 beispielsweise aus Kupfer oder Messing gefertigt, sodass ein guter Stromübergang gewährleistet ist.

Grundsätzlich ist die Kupplung 29 ebenfalls zylinderförmig ausgebildet. Dabei sind an einem Endbereich des Zylinders die Zuleitungen für den Schweißstrom und das Schutzgas 5 angeordnet, deren Anschlüsse im Wesentlichen aus dem Stand der Technik bekannt sind. Dementsprechend sind am anderen Endbereich die Gasbohrung 37 und die Strombohrung 38 angeordnet. Zwischen diesen Endbereichen ist im Wesentlichen ein Quader 46 angeordnet, also im Wesentlichen in der Mitte der Kupplung 29. Dieser Quader 46 dient zur Montage des Fixierelements 34. Dazu weist der Quader 46 beispielsweise eine Fixierbohrung 47 auf, welche gegenüber der Mittelachse 40 des Befestigungssystems 31 - in diesem Fall der Kupplung 29 - um 90° versetzt ist und somit radial angeordnet ist. Dabei überschneidet sich ein Teil der Fixierbohrung 47 mit der Strombohrung 38. Das heißt, dass beispielsweise die Mittelachse der Fixierbohrung 47 an einem Punkt den Umfang der Strombohrung 38 schneidet. In diesem Fall entspricht die Mittelachse der Fixierbohrung 47 also einer Tangente. Ebenso kann die Mittelachse der Fixierbohrung 47 auch als Passante ausgeführt sein. Wird nun das Fixierelement 34 in der Fixierbohrung 47 fixiert, resultiert das Kreissegment in der Strombohrung 38 im Bereich der Überschneidung von Strombohrung 38 und Fixierbohrung 47. Beispielsweise wird das Fixierelement 34 durch eine Federbuchse, eine Spannhülse oder dergleichen gebildet. Dementsprechend ist also auch das Fixierelement 34 zylinderförmig ausgebildet, wobei das Fixierelement 34 auch federnde Eigenschaften aufweisen kann. Somit entsteht das Kreissegment bei einem Schnitt durch den Quader 46. Bei dreidimensionaler Betrachtung handelt es sich nicht um ein Kreissegment, welches dementsprechend eine Ellipsenform aufweist, sondern um ein Kugelsegment in Ellipsenform.

Des Weiteren sind im Mantel der Strombohrung 38 mehrere Schlitze 48 angeordnet, sodass Backen 49 entstehen. Dadurch wird der Durchmesser der Strombohrung 38 zumindest geringfügig reduziert. Dies erfolgt entsprechend durch die Reduktion der Eigenspannung des Mantels. Dementsprechend werden beim Einführen des Steckelements 28 die durch die Schlitze 48 entstehenden Backen 49 auseinandergedrückt, sodass die Backen 49 gegen das Steckelement 28 gedrückt werden wodurch ein verbesserter Stromübergang entsteht. Zusätzlich oder anstelle der Schlitze 48 können auch Lamellen in der Strombohrung 38 angeordnet sein, wodurch ebenfalls der Stromübergang verbessert wird.

Bevorzugt ist das Fixierelement 34 im Brennergriff 26 oben angeordnet. Demnach ist das Fixierelement 34 im Wesentlichen unter einem Brennertaster 50 angeordnet, wobei der Brennertaster 50 entsprechend an der Oberseite des Brennergriffs 26 angeordnet ist.

Im Gegensatz dazu ist die Flachstelle 35 am Steckelement 28 nach unten ausgerichtet, also in Richtung einer Gasdüse 51 des Brennerkörpers 27.

Somit ist vorgesehen, dass der Brennerkörper 27 im Wesentlichen um 180° zur üblichen Schweißposition verdreht und mit der Flachstelle 35 des Befestigungselements 30 über das Fixierelement 34 in die Kupplung 29 im Brennergriff 26 eingeführt wird. Daraus resultiert, dass die Position des Brennerkörpers 27 für Schweißvorgänge im Wesentlichen im unteren Halbkreis bzw. Winkelbereich durch die Drehbewegung einstellbar ist, und dadurch ein nicht vorgesehenes Lösen des Brennerkörpers 27 ausgeschlossen wird. Ebenso wird der Brennerkörper 27 durch die Drehbewegung befestigt und die Schweißposition über die Drehbewegung eingestellt. Selbstverständlich ist das erfindungsgemäße Befestigungssystem 31 zum Einsatz bei gasgekühlten und wassergekühlten Schweißbrennern 7 ausgebildet.

## Patentansprüche

1. Befestigungssystem (31) für die lösbare Befestigung eines Brennerkörpers (27) eines WIG-Schweißbrenners (7) an einem Brennergriff (26) und zur Übertragung zumindest der Medien Gas (5) und Strom, mit einem zylinderförmigen Steckelement (28) zur Verbindung mit dem Brennerkörper (27), und einer Kupplung (29) zur Verbindung mit dem Brennergriff (26), welche Kupplung (29) zur lösbaren Aufnahme des Steckelements (28) ausgebildet ist, **dadurch gekennzeichnet, dass** das Steckelement (28) ein Gaselement (32) und ein Stromelement (33) und ein dazwischen angeordnetes Befestigungselement (30) mit einer Flachstelle (35), einer umlaufenden Nut (36) und einem Steg (38) aufweist, wobei das Gaselement (32) einen geringeren Durchmesser als das Befestigungselement (30) und das Stromelement (33) aufweist, und dass die Kupplung (29) eine Gasbohrung (37) und ein Fixierelement (34) aufweist, über welches Fixierelement (34) das Befestigungselement (30) mit der Flachstelle (35) in einen zusammengesteckten Zustand führbar ist, bis das Gaselement (32) in der Gasbohrung (37) der Kupplung (29) dichtend angeordnet ist, wobei im zusammengesteckten Zustand das Steckelement (28) gegenüber der Kupplung (29) im Wesentlichen beliebig verdrehbar ist, wobei das Fixierelement (34) in der Nut (36) des Steckelements (28) geführt ist.

2. Befestigungssystem (31) nach Anspruch 1, **dadurch gekennzeichnet, dass** zwischen der Nut (36) und dem Steg (39) des Befestigungselements (30) des Steckelements (28) ein in Richtung zur Nut (36) verjüngt ausgebildeter Konus (44) angeordnet ist.

3. Befestigungssystem (31) nach Anspruch 1 oder 2, **dadurch gekennzeichnet, dass** am dem Gaselement (32) gegenüberliegenden Ende des Steckelements (28) ein Anschlag (41) angeordnet ist.

4. Befestigungssystem (31) nach Anspruch 3, **dadurch gekennzeichnet, dass** ein Federelement (45) vor dem Anschlag (41) positioniert ist.

5. Befestigungssystem (31) nach einem der Ansprüche 1 bis 4, **dadurch gekennzeichnet, dass** im Gaselement (32) des Steckelements (28) eine Nut (43) für einen Dichtring (42) angeordnet ist.

6. Befestigungssystem (31) nach einem der Ansprüche 1 bis 5, **dadurch gekennzeichnet, dass** am Gaselement (32) des Steckelements (28) eine mit der Flachstelle (35) des Befestigungselements (30) fluchtende Flachstelle angeordnet ist.

7. Befestigungssystem (31) nach einem der Ansprüche 1 bis 6, **dadurch gekennzeichnet, dass** in der Kupplung (29) zwei konzentrische Bohrungen für das Steckelement (28) angeordnet sind, wobei eine Bohrung als Gasbohrung (37) und die weitere Bohrung als Strombohrung (38) ausgebildet ist.

8. Befestigungssystem (31) nach Anspruch 7, **dadurch gekennzeichnet, dass** das Fixierelement (34) in der Kupplung (29) in der Strombohrung (38) in Form eines Kreissegments angeordnet ist und an dieser Stelle einen Durchmesser der Strombohrung (38) verringert.

9. Befestigungssystem (31) nach einem der Ansprüche 1 bis 8, **dadurch gekennzeichnet, dass** die Kupplung (29) zylinderförmig ausgebildet ist und im Bereich des Fixierelements (34) ein Quader (46) angeordnet ist.

10. Brennerkörper (27) für ein Befestigungssystem (31) eines WIG-Schweißbrenners (7) nach einem der Ansprüche 1 bis 9, **dadurch gekennzeichnet, dass** der Brennerkörper (27) ein Steckelement (28) aufweist, wobei das Steckelement (28) ein Gaselement (32) und ein Stromelement (33) und ein dazwischen angeordnetes Befestigungselement (30) mit einer Flachstelle (35), einer umlaufenden Nut (36) und einem Steg (38) aufweist, wobei das Gaselement (32) einen geringeren Durchmesser als das Befestigungselement (30) und das Stromelement (33) aufweist, so dass das Steckelement (28) im zusammengesteckten Zustand gegenüber der Kupplung (29) des Befestigungssystems (31) im Wesentlichen beliebig verdrehbar ist.

11. Brennerkörper (27) nach Anspruch 10, **dadurch gekennzeichnet, dass** zwischen der Nut (43) und dem Steg (39) des Befestigungselements (30) des Steckelements (28) ein in Richtung zur Nut (36) verjüngt ausgebildeter Konus (44) angeordnet ist.

12. Brennerkörper (27) nach Anspruch 10 oder 11, **dadurch gekennzeichnet, dass** im Gaselement (32) des Steckelements (28) eine Nut (43) für einen Dichtring (42) angeordnet ist.

13. WIG-Schweißbrenner (7) mit einem Brennergriff (26), einem Brennerkörper (27) und einem Befestigungssystem (31) nach einem der Ansprüche 1 bis 9, wobei der Brennergriff (26) die Kupplung (29) des Befestigungssystems (31) enthält, und wobei der Brennerkörper (27) das Steckelement (28) des Befestigungssystems (31) enthält, wobei das mit dem Brennerkörper (27) verbundene Steckelement (28) um 180° zur üblichen Schweißposition verdreht und mit der Flachstelle (35) des Befestigungselements (30) über das Fixierelement (34) in den Brennergriff (26) in einem zusammengesteckten Zustand führbar ist, und das mit dem Brennerkörper (27) verbundene Steckelement (28) durch eine Drehbewegung befestigbar ist, und das Steckelement (28) im zusammengesteckten Zustand gegenüber der Kupplung (29) im Wesentlichen beliebig verdrehbar und die Schweißposition über die Drehbewegung einstellbar ist.

14. WIG-Schweißbrenner (7) nach Anspruch 13, **dadurch gekennzeichnet, dass** die Position des Brennerkörpers (27) in einem durch das Befestigungselement (30) des Steckelements (28) vorgegebenen Winkel stufenlos einstellbar ist.

## Claims

1. A securing system (31) for detachably securing a torch body (27) of a TIG welding torch (7) to a torch handle (26) and for transmitting at least the media gas (5) and current, including a cylindrical plug-in element (28) for connecting to the torch body (27) and a coupling (29) for connecting to the torch handle (26), said coupling (29) being designed to detachably receive the plug-in element (28), **characterized in that** the plug-in element (28) comprises a gas element (32) and a current element (33) and an interposed securing element (30) including a flat area (35), a circumferential groove (36) and a web (39), wherein the gas element (32) has a diameter smaller than those of the securing element (30) and the current element (33), and that the coupling (29) comprises a gas bore (37) and a fixing element (34), via which fixing element (34) the securing element (30) with the flat area (35) can be guided into a plugged-together state until the gas element (32) is sealingly arranged in the gas bore (37) of the coupling (29), wherein, in the plugged-together state, the plug-in element (28) is substantially arbitrarily rotatable relative to the coupling (29), with the fixing element (34) being guided in the groove (36) of the plug-in element (28).

2. A securing system (31) according to claim 1, **characterized in that** a cone (44) that is designed to taper towards the groove (36) is arranged between the groove (36) and the web (39) of the securing element (30) of the plug-in element (29).

3. A securing system (31) according to claim 1 or 2, **characterized in that** a stop (41) is arranged on the end of the plug-in element (28) opposite the gas element (32).

4. A securing system (31) according to claim 3, **characterized in that** a spring element (45) is positioned in front of the stop (41).

5. A securing system (31) according to any one of claims 1 to 4, **characterized in that** a groove (43) for a sealing ring (42) is provided in the gas element (32) of the plug-in element (28).

6. A securing system (31) according to any one of claims 1 to 5, **characterized in that** a flat area in alignment with the flat area (35) of the securing element (30) is provided on the gas element (32) of the plug-in element (28).

7. A securing system (31) according to any one of claims 1 to 6, **characterized in that** two concentric bores are provided in the coupling (29) for the plug-in element (28), one bore being designed as a gas bore (37) and the further bore being designed as a current bore (38).

8. A securing system (31) according to claim 7, **characterized in that** the fixing element (34) in the coupling (29) is arranged in the current bore (38) in the form of a circular segment and reduces a diameter of the current bore (38) at this point.

9. A securing system (31) according to any one of claims 1 to 8, **characterized in that** the coupling (29) is cylindrically designed and a parallelepiped (46) is arranged in the region of the fixing element (34).

10. A torch body (27) for a securing system (31) of a TIG welding torch (7) according to any one of claims 1 to 9, **characterized in that** the torch body (27) comprises a plug-in element (28), said plug-in element (28) including a gas element (32) and a current element (33) and an interposed securing element (30) having a flat area (35), a circumferential groove (36) and a web (39), wherein the gas element (32) has a diameter smaller than those of the securing element (30) and the current element (33) such that the plug-in element (28), in the plugged-together state, is substantially arbitrarily rotatable relative to the coupling (29) of the securing system (31).

11. A torch body (27) according to claim 10, **characterized in that** a cone (44) that is designed to taper towards the groove (36) is arranged between the groove (43) and the web (39) of the securing element (30) of the plug-in element (28).

12. A torch body (27) according to claim 10 or 11, **characterized in that** a groove (43) for a sealing ring (42) is provided in the gas element (32) of the plug-in element (28).

13. A TIG welding torch (7) including a torch handle (26), a torch body (27) and a securing system (31) according to any one of claims 1 to 9, wherein the torch handle (26) comprises the coupling (29) of the securing system (31), and wherein the torch body (27) comprises the plug-in element (28) of the securing system (31), wherein the plug-in element (28), which is connected to the torch body (27), is guidable into the torch handle (26) in a plugged-together state in a manner rotated by 180° relative to the usual welding position and with the flat area (35) of the securing element (30) over the fixing element (34), and the plug-in element (28), which is connected to the torch body (27), is securable by a rotational movement, and the plug-in element (28), in the plugged-together state, is substantially arbitrarily rotatable relative to the coupling (29), with the welding position being adjustable via said rotational movement.

14. A TIG welding torch (7) according to claim 13, **characterized in that** the position of the torch body (27) is infinitely adjustable at an angle that is preset by the securing element (30) of the plug-in element (28).

## Revendications

1. Système de fixation (31) pour la fixation amovible d'un corps de chalumeau (27) d'un chalumeau de soudage WIG (7) sur une poignée de chalumeau (26) et pour la transmission d'au moins les fluides gaz (5) et électricité, avec un élément enfichable (28) de forme cylindrique pour la liaison avec le corps de chalumeau (27), et un couplage (29) pour la liaison avec la poignée du chalumeau (26), lequel couplage (29) étant façonné pour le logement amovible de l'élément enfichable (28), **caractérisé en ce que** l'élément enfichable (28) comprend un élément de gaz (32) et un élément électrique (33) ainsi qu'un élément de fixation (30) disposé entre eux, avec une zone plate (35), une rainure circulaire (36) et une nervure (39), l'élément de gaz (32) présentant un diamètre inférieur à celui de l'élément de fixation (30) et à celui de l'élément électrique (33), et **en ce que** le couplage (29) présente un alésage pour le gaz (37) et un élément de blocage (34), cet élément de blocage (34) permettant de guider l'élément de fixation (30) avec la zone plate (35) dans un état emboîté; jusqu'à ce que l'élément de gaz (32) soit disposé de manière étanche dans l'alésage pour le gaz (37) du couplage (29), l'élément enfichable (28) étant rotatif, dans l'état emboîté, par rapport au couplage (29) sensiblement quelconque, l'élément de blocage (34) étant guidé dans la rainure (36) de l'élément enfichable (28).

2. Système de fixation (31) selon la revendication 1, **caractérisé en ce que**, entre la rainure (36) et la nervure (39) de l'élément de fixation (30) de l'élément enfichable (28), est disposé un cône (44) façonné de manière à se rétrécir en direction de la rainure (36).

3. Système de fixation (31) selon la revendication 1 ou 2, **caractérisé en ce que**, à l'extrémité de l'élément enfichable (28) opposé à l'élément de gaz (32), est disposée une butée (41).

4. Système de fixation (31) selon la revendication 3, **caractérisé en ce qu'**un élément élastique (45) est positionné avant la butée (41).

5. Système de fixation (31) selon l'une quelconque des revendications 1 à 4, **caractérisé en ce que**, dans l'élément de gaz (32) de l'élément enfichable (28) est disposé une rainure (43) pour une bague d'étanchéité (42).

6. Système de fixation (31) selon l'une quelconque des revendications 1 à 5, **caractérisé en ce que**, sur l'élément de gaz (32) de l'élément enfichable (28) est disposée une zone plate alignée sur la zone plate (35) de l'élément de fixation (30).

7. Système de fixation (31) selon l'une quelconque des revendications 1 à 6, **caractérisé en ce que**, deux alésages concentriques pour l'élément enfichable (28), un alésage étant façonné comme un alésage pour le gaz (37) et l'autre alésage étant conçu comme un alésage pour l'électricité (38) sont disposés dans l'accouplement (29).

8. Système de fixation (31) selon la revendication 7, **caractérisé en ce que** l'élément de blocage (34) est disposé dans le couplage (29) dans l'alésage pour l'électricité (38) sous la forme d'un segment de cercle et, à cet endroit, le diamètre de l'alésage pour l'électricité (38) diminue.

9. Système de fixation (31) selon l'une quelconque des revendications 1 à 8, **caractérisé en ce que** le couplage (29) est façonné sous forme cylindrique et un bloc (46) est disposé au niveau de l'élément de blocage (34).

10. Corps de chalumeau (27) pour un système de fixation (31) d'un chalumeau de soudage WIG (7) selon l'une quelconque des revendications 1 à 9, **caractérisé en ce que** le corps de chalumeau (27) présente un élément enfichable (28), l'élément enfichable (28) présentant un élément de gaz (32) et un élément électrique (33) ainsi qu'un élément de fixation (30) disposé entre eux, avec une zone plate (35), une rainure circulaire (36) et une nervure (38), l'élément de gaz (32) présentant un diamètre inférieur à celui de l'élément de fixation (30) et à celui de l'élément électrique (33), de sorte que l'élément enfichable (28) est rotatif, dans l'état emboîté, par rapport au couplage (29) du système de fixation (31) sensiblement quelconque

11. Corps de chalumeau (27) selon la revendication 10, **caractérisé en ce que**, entre la rainure (36) et la nervure (39) de l'élément de fixation (30) de l'élément enfichable (28), est disposé un cône (44) façonné de manière à se rétrécir en direction de la rainure (36).

12. Corps de chalumeau (27) selon la revendication 10 ou 11, **caractérisé en ce que**, dans l'élément de gaz (32) de l'élément enfichable (28) est disposée une rainure (36) pour une bague d'étanchéité (42).

13. Chalumeau de soudage WIG (7) doté d'une poignée de chalumeau (26), un corps de chalumeau (27) et un système de fixation (31) selon l'une quelconque des revendications 1 à 9, la poignée du chalumeau (26) incluant le couplage (29) du système de fixation (31) et le corps de chalumeau (27) incluant l'élément enfichable (28) du système de fixation (31), l'élément enfichable (28) relié au corps du chalumeau (27) étant tourné de 180° par rapport à la position de soudure habituelle et pouvant être guidée, avec la zone plate (35) de l'élément de fixation (30) par l'intermédiaire de l'élément de blocage (34) dans la poignée du chalumeau (26), dans l'état emboîté et l'élément enfichable (28) relié au corps du chalumeau (27) pouvant être fixé par un mouvement rotatif et l'élément enfichable (28) pouvant être tourné, dans l'état emboîté, sensiblement quelconque, par rapport au couplage (29) et la position de soudage étant réglable par le mouvement rotatif.

14. Chalumeau de soudage WIG (7) selon la revendication 13, **caractérisé en ce que** la position du corps du chalumeau (27) est réglable de manière continue à un angle prédéterminé par l'élément de fixation (30) de l'élément enfichable (28).
